Europäisches Patentamt

European Patent Office

Office européen des brevets

(19)

(11) **EP 1 136 335 A1**

## (12) DEMANDE DE BREVET EUROPEEN

(43) Date de publication:
**26.09.2001 Bulletin 2001/39**

(51) Int Cl.$^7$: **B60T 8/00**

(21) Numéro de dépôt: **01400731.4**

(22) Date de dépôt: **21.03.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **24.03.2000 FR 0003781**

(71) Demandeur: **Peugeot Citroen Automobiles SA 92200 Neuilly sur Seine (FR)**

(72) Inventeur: **Bailleux, François 91400 Val d'Albian (FR)**

(74) Mandataire: **Bentz, Jean-Paul Cabinet Weinstein, 56 A, rue du Faubourg Saint-Honoré 75008 Paris (FR)**

(54) **Procédé de modulation adaptative d'un couple de freinage**

(57) L'invention concerne un procédé permettant d'éviter le blocage d'une roue d'un véhicule, ce procédé comprenant une opération consistant à évaluer le taux de glissement ($\lambda$) de cette roue sur la voie, et une opération consistant à augmenter ou à diminuer le couple de freinage appliqué à la roue selon que ce taux ($\lambda$) est inférieur à une première limite (L1) ou supérieur à une seconde limite (L2).

Le procédé de l'invention prévoit de donner à la première limite (L1) une valeur ($\lambda 11$, $\lambda 12$) liée par une loi croissante au rayon de courbure de la trajectoire du véhicule pour réduire la distance de freinage en ligne droite.

Fig.5

EP 1 136 335 A1

## Description

La présente invention concerne un procédé de modulation d'un couple de freinage, du type de ceux qui permettent d'éviter le blocage des roues d'un véhicule automobile.

Plus précisément, la présente invention concerne un procédé de modulation d'un couple de freinage exercé sur une roue d'un véhicule automobile se déplaçant sur une voie de roulement, ce procédé comprenant une première opération d'acquisition de données consistant à obtenir une évaluation d'un taux de glissement de la roue sur la voie, et une opération de modulation consistant à augmenter ou à diminuer le couple de freinage selon que ce taux est inférieur à une première limite ou supérieur à une seconde limite, elle-même au moins égale à la première limite.

Les procédés de ce type sont bien connus de l'homme de l'art depuis plusieurs décennies sous les noms de systèmes ABR ("anti-blocage des roues") ou ABS (de l'allemand "Antiblockiersysteme"), ces systèmes équipant aujourd'hui une forte proportion des véhicules mis en circulation.

L'intérêt de ces procédés réside, d'une part, dans le fait qu'un véhicule dont les roues se bloquent devient très difficilement contrôlable, d'autre part dans le fait qu'une roue bloquée ne peut appliquer qu'une force de freinage réduite, et enfin dans le fait qu'un freinage entraînant un blocage des roues peut engendrer une telle usure ponctuelle des pneumatiques correspondants que ces derniers deviennent bruyants au roulement, voire dangereux, et doivent être changés.

Ces procédés tirent parti de lois physiques connues, qui permettent de détecter l'imminence des situations critiques qu'il convient d'éviter.

Plus précisément, on sait que la décélération d'un véhicule est proportionnelle au travail des forces de freinage appliquées à ce véhicule, ces forces étant elles-mêmes proportionnelles à un paramètre associé à l'interface que forment les pneus du véhicule avec la voie, ce paramètre étant désigné sous le nom d'adhérence longitudinale et traditionnellement noté $\mu_L$.

La stabilité dynamique du véhicule sur la trajectoire que lui impriment les roues est quant à elle déterminée par un autre paramètre associé à cette interface, dit adhérence transversale ou latérale, et noté $\mu_T$.

L'adhérence longitudinale et l'adhérence transversale sont liées entre elles par une loi sensiblement elliptique, c'est-à-dire une loi quadratique du type :

$$A. (\mu_L)^2 + B. (\mu_T)^2 = K,$$

où K est une constante liée au pneu et à l'état de la voie, où A et B sont des coefficients dépendant notamment de la structure interne du pneu et de la forme de sa surface d'appui sur la voie, et où le coefficient A est en général inférieur au coefficient B, $\mu_L$ étant donc en général supérieur à $\mu_T$.

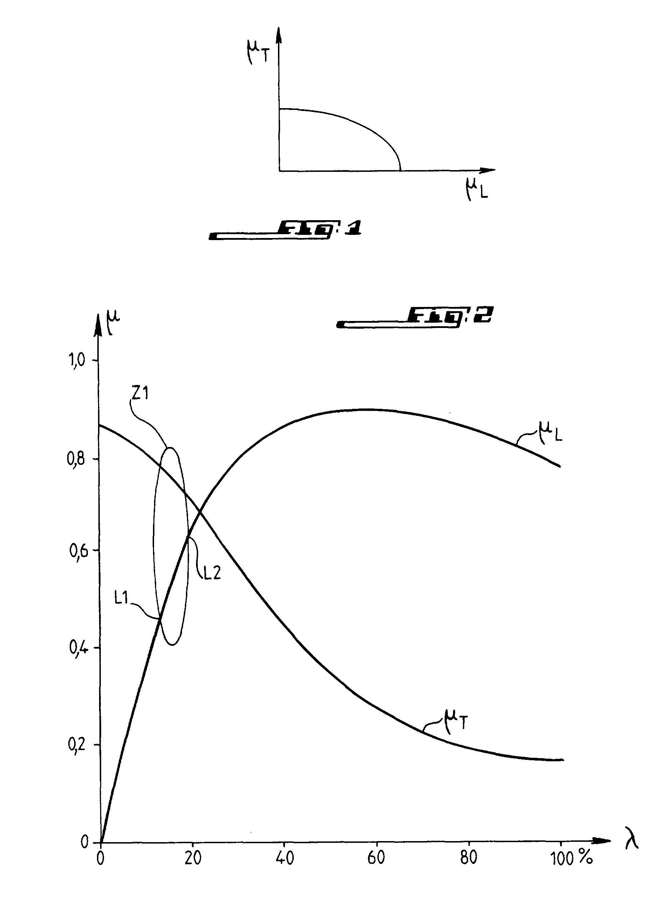

La figure 1 illustre un exemple de loi de ce type.

Par ailleurs, l'adhérence longitudinale $\mu_L$ est liée à un autre paramètre physique, appelé "taux de glissement de la roue sur la voie", généralement noté $\lambda$, et représenté par le rapport :

$$(Vv - Vr) / Vv,$$

où Vv est la vitesse de progression instantanée du véhicule, et où Vr est la vitesse tangentielle de la périphérie de la roue par rapport au véhicule, Vr étant donc encore représentée par le produit R.$\omega$, où R est le rayon de la roue, et $\omega$ la vitesse angulaire de rotation de cette roue.

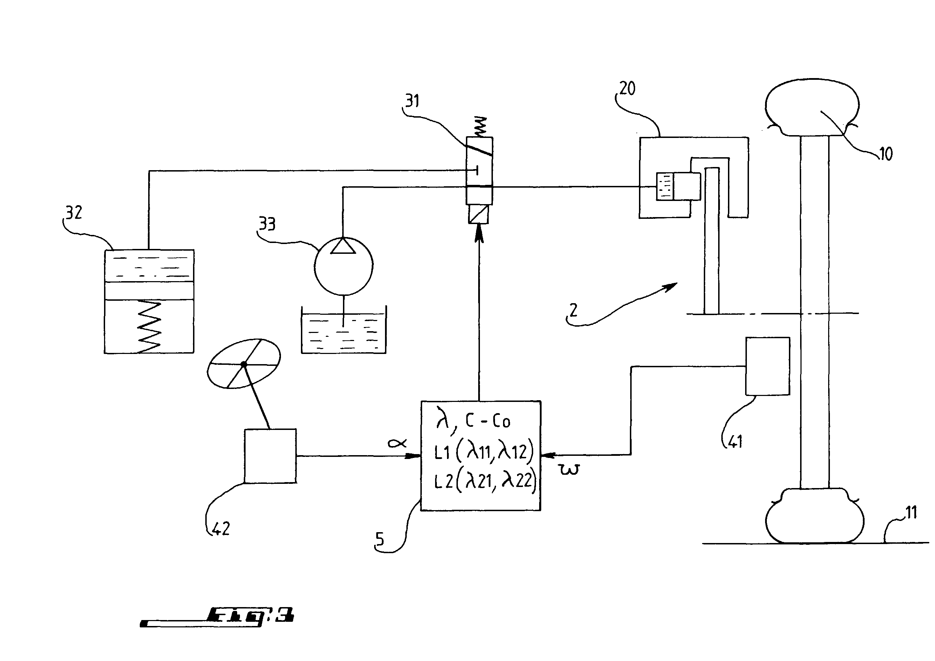

L'adhérence longitudinale $\mu_L$ est liée au taux de glissement $\lambda$ par une loi croissante du type à saturation - déperdition, dont le graphe, illustré à la figure 2, passe donc par un maximum $\mu_L$ max avant de décroître à nouveau.

Compte tenu de la relation qui lie l'adhérence transversale à l'adhérence longitudinale, et de la relation qui lie cette dernière au taux de glissement, l'adhérence transversale $\mu_T$ est finalement liée au taux de glissement $\lambda$ par une loi décroissante du type à retard et compensation, dont le graphe est également illustré à la figure 2.

En l'absence de système évitant le blocage des roues, une action de freinage qui se prolonge au-delà du maximum $\mu_L$ max devient très dangereuse pour deux raisons.

D'une part, une telle évolution engendre un risque immédiat de perte de contrôle directionnel du véhicule, dans la mesure où la valeur de l'adhérence transversale $\mu_T$ chute rapidement de façon importante.

D'autre part, comme la force de freinage qui s'exerce alors entre le châssis du véhicule et la roue est nécessairement supérieure à la force de traînée maximale, proportionnelle à $\mu_L$ max, qui puisse s'exercer entre les roues et la voie de roulement, puisqu'elle est parvenue à la vaincre, et comme la force de traînée instantanée, proportionnelle à $\mu_L$, ne fait plus que décroître pour les valeurs de l'adhérence transversale qui se situent au-delà de la valeur maximum $\mu_L$ max, le processus de freinage devient instable par rétroaction positive pour ces valeurs de $\mu_L$ et évolue irrémédiablement, s'il se poursuit dans les mêmes conditions, vers un blocage des roues et corrélativement vers la valeur minimale de l'adhérence transversale $\mu_T$.

Dans ces conditions, les procédés de freinage conçus pour éviter le blocage des roues opèrent une modulation du couple de freinage exercé sur chaque roue, du train avant au moins, de manière à éviter une perte de contrôle directionnel du véhicule, c'est-à-dire dans une zone telle que la zone notée Z1 sur la figure 2, où l'adhérence transversale $\mu_T$ présente une valeur relativement élevée.

A cette fin, les circuits de freinage qui mettent en oeuvre un tel procédé comprennent de façon connue des capteurs de rotation de roues qui permettent, par comparaison des mesures obtenues pour l'ensemble des roues du véhicule et par différences, d'évaluer la vitesse Vv du véhicule et les vitesses tangentielles Vr de chaque roue, donc d'évaluer le taux de glissement $\lambda$ pour chaque roue.

Ces circuits de freinage comprennent en outre des actionneurs, tels que des freins à disque, dont chacun est associé à une roue et applique à cette roue un couple de freinage dépendant de la pression d'un liquide de frein qui lui est fourni, un modulateur comprenant des électrovalves, un réservoir de liquide de frein à basse pression, et une pompe commandée électriquement pour mettre le liquide de frein sous pression.

Lorsque le taux de glissement $\lambda$ de la roue sur la voie est inférieur à la première limite L1, le modulateur est commandé pour relier l'actionneur de cette roue à la pompe et augmenter le couple de freinage exercé par cet actionneur.

Lorsqu'au contraire le taux de glissement $\lambda$ de la roue sur la voie est supérieur à la seconde limite L2, le modulateur est commandé pour relier cet actionneur au réservoir basse pression et diminuer le couple de freinage.

Si ce procédé connu préserve de façon optimale la stabilité dynamique du véhicule, il a en revanche le défaut de ne pas optimiser la distance de freinage puisque celle-ci est d'autant plus courte que l'adhérence longitudinale exploitée au moment de l'application du couple de freinage est élevée, alors que le procédé travaille dans une zone d'adhérence transversale élevée, donc dans une zone d'adhérence longitudinale moyenne.

Dans ce contexte, la présente invention a pour but de proposer un procédé de modulation du couple de freinage qui permette de réduire les distances de freinage sans compromettre la stabilité dynamique du véhicule.

A cette fin, le procédé de l'invention, par ailleurs conforme à la définition générique qu'en donne le préambule ci-dessus, est essentiellement caractérisé en ce qu'il comprend, outre l'opération d'acquisition de données permettant d'obtenir une évaluation du taux de glissement, une seconde opération d'acquisition de données consistant à obtenir une évaluation du rayon de courbure de la trajectoire du véhicule souhaité par le conducteur, et une opération d'adaptation consistant à donner à la première limite une valeur liée à ce rayon de courbure souhaité par une loi croissante.

Dans un mode de réalisation efficace de l'invention, l'opération d'adaptation peut simplement consister à donner à la première limite une première valeur, ou une seconde valeur supérieure à la première valeur, selon que le rayon de courbure évalué est au plus égal ou supérieur à un rayon de courbure minimal prédéterminé.

En considérant que la roue présente une adhérence longitudinale et une adhérence transversale qui dépendent toutes deux du taux de glissement, la seconde valeur de la première limite est par exemple choisie pour correspondre à une valeur du taux de glissement pour laquelle l'adhérence longitudinale est supérieure à l'adhérence transversale, et de préférence même maximale.

La seconde opération d'acquisition de données peut aisément inclure l'utilisation d'un capteur d'angle de rotation du volant du véhicule.

On notera que l'on peut encore utiliser pour la même fonction un capteur de déplacement de la crémaillère, un capteur de déplacement d'une biellette de direction ou un capteur d'angle du pivot de roue.

D'autres caractéristiques et avantages de l'invention ressortiront clairement de la description qui en est faite ci-après, à titre indicatif et nullement limitatif, en référence aux dessins annexés, dans lesquels :

- La figure 1 est un graphe illustrant un exemple de loi reliant typiquement l'adhérence longitudinale $\mu_L$ à l'adhérence transversale $\mu_T$ ;
- La figure 2 représente l'évolution de l'adhérence longitudinale $\mu_L$ et de l'adhérence transversale $\mu_T$ en fonction du taux de glissement $\lambda$ de la roue, et illustre le procédé de l'art antérieur;
- La figure 3 est un schéma d'un circuit de freinage susceptible d'être utilisé pour la mise en oeuvre de l'invention;
- La figure 4 représente une roue et certains des paramètres pertinents qui y sont associés dans le cadre de l'invention; et
- La figure 5 représente l'évolution de l'adhérence longitudinale $\mu_L$ et de l'adhérence transversale $\mu_T$ en fonction du taux de glissement $\lambda$, et illustre le procédé de l'invention.

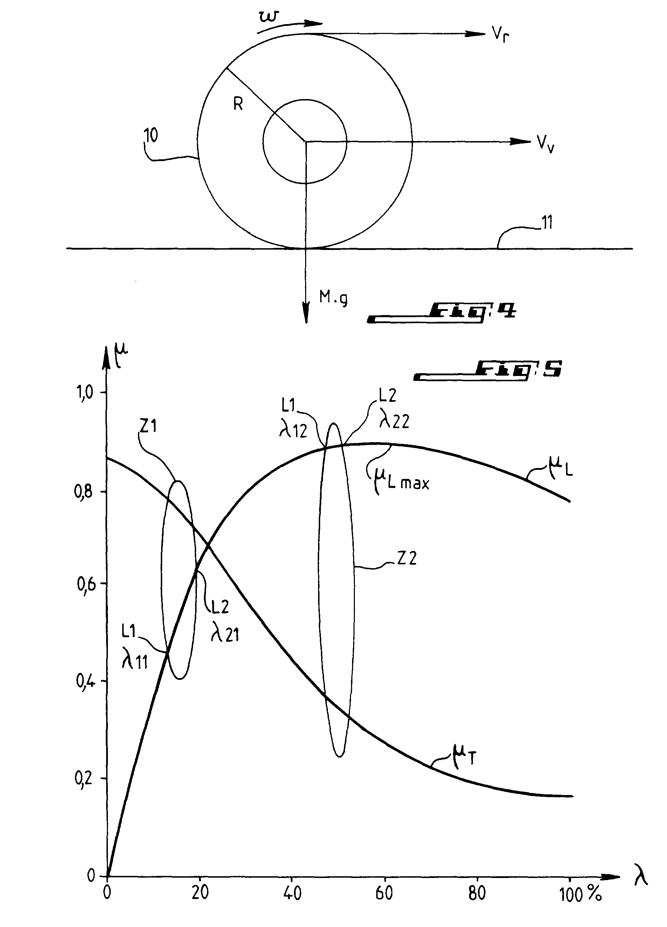

L'invention concerne un procédé de modulation d'un couple de freinage exercé (figure 4) sur une roue 10 d'un véhicule automobile se déplaçant sur une voie de roulement 11, à une vitesse instantanée Vv.

Si cette roue a, par rapport au véhicule, une vitesse angulaire instantanée de rotation $\omega$, et si son rayon est R, la vitesse tangentielle de cette roue par rapport au véhicule, notée Vr, est égale au produit $\omega.R$.

La roue supporte un poids M . g, qui intervient dans la détermination de la force de traînée susceptible d'être appliquée par freinage entre la roue 10 et la voie 11.

Par ailleurs, le véhicule automobile se déplace sur la voie 11 suivant une trajectoire de rayon de courbure déterminé, ce rayon de courbure étant éventuellement infini si cette trajectoire est rectiligne.

Le procédé de l'invention peut être mis en oeuvre par un circuit de freinage tel qu'illustré à la figure 3.

Un tel circuit comprend, de façon bien connue, un frein 2 associé à la roue 10, par exemple un frein à disque équipé d'un actionneur hydraulique 20, lui-même susceptible d'être relié, par l'intermédiaire d'une électrovalve 31, à un réservoir basse pression 32 ou à une pompe 33.

L'électrovalve 31 est commandée par une unité logique 5 pour moduler la pression de freinage appliquée au frein 2, et donc pour moduler le couple de freinage appliqué à la roue 10.

A cette fin, les circuits connus comprennent des capteurs de rotation de roue, tels que 41, qui délivrent des signaux représentatifs de la vitesse angulaire $\omega$, et à partir desquels l'unité logique 5 calcule la vitesse de progression Vv du véhicule, la vitesse tangentielle Vr d'un point de la périphérie de la roue 10, et le taux de glissement de la roue 10, représenté par le rapport :

$$(Vv - Vr) / Vv.$$

Dans ces conditions, le procédé connu illustré à la figure 2 consiste à commander l'électrovalve 31 au moyen de l'unité logique 5 de manière que le taux de glissement $\lambda$ soit toujours compris entre des limites L1 et L2, et reste donc confiné dans une zone Z1 dans laquelle l'adhérence transversale $\mu_T$ présente une valeur relativement élevée.

Pour ce faire, l'électrovalve 31 est commandée pour relier l'actionneur 20 à la pompe 33 et augmenter corrélativement le couple de freinage lorsque le taux de glissement $\lambda$ de la roue sur la voie est inférieur à la première limite L1, et pour relier l'actionneur 20 au réservoir 32 et diminuer corrélativement le couple de freinage lorsque le taux de glissement $\lambda$ de la roue sur la voie est supérieur à la seconde limite L2.

Le procédé de l'invention se distingue de ce procédé connu en ce qu'il prévoit d'adapter les limites L1 et L2 à la trajectoire souhaitée par le conducteur, et plus précisément au rayon de courbure C de cette trajectoire.

Ainsi, le procédé de l'invention prévoit de ne travailler dans la zone Z1 de taux de glissement utilisée jusqu'à présent (figure 5) que si le véhicule prend un virage qui impose de lui offrir la plus grande stabilité possible, alors qu'il prévoit de travailler dans une autre zone Z2, pour pouvoir réduire la distance de freinage, lorsque le véhicule circule en ligne droite, c'est-à-dire sans risque imminent de perte de stabilité dynamique.

A cette fin, le procédé de l'invention comprend une opération d'acquisition de données, qui consiste à obtenir une évaluation du rayon de courbure C de la trajectoire du véhicule souhaité par le conducteur, et une opération d'adaptation, qui consiste à donner à la première limite L1 une valeur $\lambda 11$ ou $\lambda 12$, liée au rayon de courbure C par une loi croissante.

En pratique, le rayon de courbure C peut être évalué par le biais de toute grandeur associée à ce rayon de courbure, telle que l'angle $\alpha$ de rotation du volant par exemple fourni par un capteur 42.

On peut aussi utiliser d'autres grandeurs mesurées par un capteur approprié, telles que la position de la crémaillère de direction, la position d'une biellette de direction, ou l'angle du pivot de roue.

Bien que le procédé de l'invention puisse a priori utiliser un continuum de zones telles que Z1 et Z2, le recours à deux zones telles qu'illustrées à la figure 5 est en général très suffisant.

Dans ce cas, l'opération d'adaptation consiste donc à donner à la première limite L1 une première valeur $\lambda 11$ si le rayon de courbure évalué C est inférieur à un rayon de courbure minimal prédéterminé C0, c'est-à-dire encore si l'angle de rotation $\alpha$ du volant, par rapport à la position de référence qu'adopte ce volant pour un déplacement en ligne droite, est supérieur à un angle de rotation maximum prédéterminé $\alpha 0$, et à donner à la première limite L1 une seconde valeur $\lambda 12$, supérieure à la première valeur $\lambda 11$, si le rayon de courbure évalué C est supérieur au rayon de courbure minimal prédéterminé C0, c'est-à-dire encore si l'angle de rotation $\alpha$ du volant est inférieur à l'angle de rotation maximum $\alpha 0$.

Comme le montre la figure 5, la seconde limite est adaptée de façon correspondante et reçoit des valeurs $\lambda 21$ et $\lambda 22$, respectivement supérieures aux valeurs $\lambda 11$ et $\lambda 12$ attribuées à la première limite L1.

Pour conférer à l'invention une efficacité sensible, la zone Z2 est choisie de manière que la seconde valeur $\lambda 12$ de la première limite L1 corresponde à une valeur du taux de glissement $\lambda$ pour laquelle l'adhérence longitudinale $\mu_L$ est supérieure à l'adhérence transversale $\mu_T$, l'invention montrant une efficacité optimale lorsque la seconde valeur $\lambda 12$ de la première limite L1 correspond à une valeur du taux de glissement $\lambda$ pour laquelle l'adhérence longitudinale est maximale, ou proche de sa valeur maximale $\mu_L$max.

## Revendications

1. Procédé de modulation d'un couple de freinage exercé sur une roue (10) d'un véhicule automobile se déplaçant sur une voie de roulement (11), ce procédé comprenant une première opération d'acquisition de données consistant à obtenir une évaluation d'un taux de glissement ($\lambda$) de la roue sur la voie, et une opération de modulation consistant à augmenter ou à diminuer le couple de freinage selon que ce taux ($\lambda$) est inférieur à une première limite (L1) ou supérieur à une seconde limite (L2), elle-même au moins égale à la première limite (L1), **caractérisé en ce qu'**il comprend une seconde opération d'acquisition de données consistant à obtenir une évaluation du rayon de courbure (C) de la trajectoire du véhicule souhaité par le conducteur, et une opération d'adaptation consistant à donner à la première limite (L1) une valeur ($\lambda 11$, $\lambda 12$) liée à ce rayon de courbure souhaité (C) par une loi croissante.

2. Procédé suivant la revendication 1, **caractérisé en ce que** l'opération d'adaptation consiste à donner à la première limite (L1) une première valeur ($\lambda 11$), ou une seconde valeur ($\lambda 12$) supérieure à la première valeur ($\lambda 11$), selon que le rayon de courbure évalué (C) est au plus égal ou supérieur à un rayon de courbure minimal prédéterminé (C0) .

3. Procédé suivant la revendication 2, **caractérisé en ce que** la roue présente une adhérence longitudinale ($\mu_L$) et une adhérence transversale ($\mu_T$) qui dépendent toutes deux du taux de glissement ($\lambda$), et en ce que la seconde valeur ($\lambda 12$) de la première limite (L1) est choisie pour correspondre à une valeur du taux de glissement ($\lambda$) pour laquelle l'adhérence longitudinale ($\mu_L$) est supérieure à l'adhérence transversale ($\mu_T$).

4. Procédé suivant la revendication 3, **caractérisé en ce que** la seconde valeur ($\lambda 12$) de la première limite (L1) est choisie pour correspondre à une valeur du taux de glissement ($\lambda$) pour laquelle l'adhérence longitudinale est maximale ($\mu_L$ max).

5. Procédé suivant l'une quelconque des revendications 1 à 4, **caractérisé en ce que** la seconde opération d'acquisition de données inclut l'utilisation d'un capteur (42) d'angle de rotation ($\alpha$) du volant du véhicule.

6. Procédé suivant l'une quelconque des revendications 1 à 4, **caractérisé en ce que** la seconde opération d'acquisition de données inclut l'utilisation d'un capteur de déplacement de la crémaillère de direction.

7. Procédé suivant l'une quelconque des revendications 1 à 4, **caractérisé en ce que** la seconde opération d'acquisition de données inclut l'utilisation d'un capteur de déplacement d'une biellette de direction.

8. Procédé suivant l'une quelconque des revendications 1 à 4, **caractérisé en ce que** la seconde opération d'acquisition de données inclut l'utilisation d'un capteur d'angle du pivot de roue.

Fig. 1

Fig. 2

FIG.3

Fig 4

Fig 5

EP 1 136 335 A1

**Office européen des brevets**

**RAPPORT DE RECHERCHE EUROPEENNE**

Numéro de la demande

EP 01 40 0731

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 315 519 A (CHIN YUEN-KWOK ET AL) 24 mai 1994 (1994-05-24) | 1,5 | B60T8/00 |
| Y | * abrégé * | 6-8 | |
| A | | 2 | |
| Y | US 5 314 036 A (KATO SHINJI ET AL) 24 mai 1994 (1994-05-24) * revendication 1; figures 2,3 * | 6 | |
| Y | FR 2 067 751 A (JUY LUCIEN) 20 août 1971 (1971-08-20) * page 2, ligne 1 - ligne 8 * | 7 | |
| Y | EP 0 905 006 A (BETTINI MARCO) 31 mars 1999 (1999-03-31) * abrégé * * figures 1,2 * | 8 | |
| A | DE 197 14 968 A (DENSO CORP) 30 octobre 1997 (1997-10-30) * colonne 17, ligne 28 - colonne 19, ligne 12 * * figure 10 * | 1,2 | **DOMAINES TECHNIQUES RECHERCHES (Int.Cl.7)** B60T B62D |
| A | US 5 024 285 A (FUJITA NAGAHISA) 18 juin 1991 (1991-06-18) * revendication 1 * | 1,5 | |

Le présent rapport a été établi pour toutes les revendications

| Lieu de la recherche | Date d'achèvement de la recherche | Examinateur |
|---|---|---|
| LA HAYE | 27 juin 2001 | Colonna, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

9

**ANNEXE AU RAPPORT DE RECHERCHE EUROPEENNE
RELATIF A LA DEMANDE DE BREVET EUROPEEN NO.**

EP 01 40 0731

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-06-2001

| Document brevet cité au rapport de recherche | | Date de publication | Membre(s) de la famille de brevet(s) | | Date de publication |
|---|---|---|---|---|---|
| US 5315519 | A | 24-05-1994 | AUCUN | | |
| US 5314036 | A | 24-05-1994 | JP<br>JP | 2504339 B<br>4238209 A | 05-06-1996<br>26-08-1992 |
| FR 2067751 | A | 20-08-1971 | AUCUN | | |
| EP 0905006 | A | 31-03-1999 | IT | B0970574 A | 24-03-1999 |
| DE 19714968 | A | 30-10-1997 | JP<br>FR | 10006949 A<br>2747984 A | 13-01-1998<br>31-10-1997 |
| US 5024285 | A | 18-06-1991 | JP | 1032955 A | 02-02-1989 |

EPO FORM P0460

Pour tout renseignement concernant cette annexe : voir Journal Officiel de l'Office européen des brevets, No. 12/82